# EUROPEAN PATENT SPECIFICATION

(11) **EP 2 929 493 B1**
(45) Date of publication and mention of the grant of the patent: **14.11.2018**
(21) Application number: 13859656.4
(22) Date of filing: 05.12.2013
(51) Int. Cl.: G06Q 30/00, G06Q 20/38

(54) **A METHOD FOR SECURELY STORING AND FORWARDING PAYMENT TRANSACTIONS**
VERFAHREN ZUR SICHEREN SPEICHERUNG UND WEITERLEITUNG VON ZAHLUNGSTRANSAKTIONEN
PROCÉDÉ DE STOCKAGE ET DE TRANSFERT SÉCURISÉS DE TRANSACTIONS DE PAIEMENT

(30) Priority: 05.12.2012 US 201261733862 P; 08.01.2013 US 201313736447
(43) Date of publication of application: 14.10.2015
(73) Proprietor: Square, Inc., San Francisco, California 94103 (US)
(72) Inventor: QUIGLEY, Oliver S.C., San Francisco, California 94103 (US); CUMMINS, Justin, San Francisco, California 94103 (US); BOLTEN, Eric, San Francisco, California 94103 (US); MCCAULEY, Nathan, San Francisco, California 94103 (US); KALINICHENKO, Alexey, San Francisco, California 94103 (US)
(74) Representative: Shipp, Nicholas
(86) International application number: PCT/US2013/073302
(87) International publication number: WO 2014/089288

(56) References cited:
- US-A1- 2008 091 944
- US-A1- 2010 293 099
- US-A1- 2011 082 798
- US-A1- 2011 270 761
- US-A1- 2012 191 522
- "Payment Card Industry (PCI) Hardware Security Module (HSM) Security Requirements Version 1.0", , 30 April 2009 (2009-04-30), XP055168869, Retrieved from the Internet: URL:https://www.pcisecuritystandards.org/d ocuments/PCI HSM Security Requirements v1.0 final.pdf [retrieved on 2015-02-10]
- Donald L Evans ET AL: "FIPS PUB 140-2 CHANGE NOTICES (12-03-2002) SECURITY REQUIREMENTS FOR CRYPTOGRAPHIC MODULES CATEGORY: COMPUTER SECURITY SUBCATEGORY: CRYPTOGRAPHY", , 12 March 2002 (2002-03-12), XP055142285, Retrieved from the Internet: URL:http://csrc.nist.gov/publications/fips /fips140-2/fips1402.pdf [retrieved on 2014-09-24]
- R Housley ET AL: "Internet X.509 Public Key Infrastructure Certificate and Certificate Revocation List (CRL) Profile", , 30 April 2002 (2002-04-30), XP055053109, Retrieved from the Internet: URL:http://tools.ietf.org/pdf/rfc3280.pdf [retrieved on 2013-02-12]
- Andrew S. Tanenbaum,: "Distributed Systems: Principles and Paradigms (2nd Edition)" In: "Distributed Systems: Principles and Paradigms (2nd Edition)", 12 October 2006 (2006-10-12), Prentice Hall, XP055118097, ISBN: 978-0-13-239227-3 pages 273-320, * page 273 - page 274 *
- Anonymous: "cryptography - PCI Encryption Key Management - Information Security Stack Exchange", , 1 January 2011 (2011-01-01), XP055415553, Retrieved from the Internet: URL:https://security.stackexchange.com/que stions/1412/pci-encryption-key-management [retrieved on 2017-10-13]
- Anonymous: "PCI DSS compliant Key Management", , 31 July 2011 (2011-07-31), XP055415555, Retrieved from the Internet: URL:http://www.src-gmbh.de/pcinews/downloa d/PCI-Whitepaper-2011-07.pdf [retrieved on 2017-10-13]

## Description

### TECHNICAL FIELD

This disclosure relates to mobile payment processing using a mobile device.

### BACKGROUND

In a conventional point-of-sale electronic credit card transaction, the transaction is authorized and captured over a network connection. In the authorization stage, a physical credit card with a magnetic stripe is swiped through a merchant's magnetic card reader, e.g., as part of a point-of-sale device. A payment request is sent electronically from the magnetic card reader to a credit card processor. The credit card processor routes the payment request to a card network, e.g., Visa or Mastercard, which in turn routes the payment request to the card issuer, e.g., a bank. Assuming the card issuer approves the transaction, the approval is then routed back to the merchant. In the capture stage, the approved transaction is again routed from the merchant to the credit card processor, card network and card issuer, and the payment request can include the cardholder's signature (if appropriate). The capture stage can trigger the financial transaction between the card issuer and the merchant, and optionally creates a receipt. There can also be other entities, e.g., the card acquirer, in the route of the transaction. Debit card transactions have a different routing, but also require swiping of the card.

Occasionally, network problems, such as network unavailability or network latency, interfere with routing of the payment request to the card issuer. For example, when the credit card processor receives a payment request from a merchant but there is no network connection to the card network, the credit card processor can reject the transaction because of the network issues. The merchant is notified of the rejection and can try to process transactions later when the network issues are resolved.

US 2012/0191522 for instance discloses a POS terminal capable of running in an offline mode when the connection to a central server is not available by storing encrypted transactions in a local manner.

### SUMMARY

Card issuers and card networks may occasionally experience network issues and therefore may not be constantly available for payment processing. A payment processor can temporarily store transaction data and process the transaction data at a subsequent time. On the one hand, it would be desirable for the payment processor to store the transaction data in multiple locations, e.g., for ease of transaction processing or to guard against the possibility of server failure. On the other hand, there are stringent regulations on the storage of credit card numbers.

The payment processor can encrypt and store the transaction data in multiple distinct servers. The payment processor can determine whether the network issues are resolved so that the transaction data can be processed. If the network issues are resolved, the payment processor can retrieve the stored transaction data from the servers, decrypt the stored transaction data using a decryption key, and submit the transaction data for processing. Upon receiving an indication of the processing, the payment processor can then delete the decryption key and purge the stored transaction data from the servers.

In one aspect, a method of processing a payment transaction includes receiving transaction data for the payment transaction, where the transaction data includes at least card track data; when a network connection problem occurs between the data processing apparatus and an issuer, encrypting the transaction data at the data processing apparatus using an encryption key of a cryptographic key pair to generate encrypted transaction data, where the cryptographic key pair includes the encryption key and a decryption key and the decryption key is stored in a hardware security module connected to the data processing apparatus; storing a plurality of copies of the encrypted transaction data in a plurality of storage devices, where each storage device is a distinct external server in a distinct geographic location; identifying transaction data that is encrypted by the encryption key; determining the encryption key is not being used to encrypt new transactions; determining that there are no pending authorizations of the transaction data encrypted with the encryption key to be processed by the issuer; decrypting the identified transaction data at the hardware security module using the decryption key; deleting the decryption key; generating a new cryptographic key pair, where the new cryptographic key pair includes a new encryption key and a new decryption key stored at the hardware security module; and encrypting the decrypted transaction data using the new encryption key; redistributing the newly encrypted transaction data to the plurality of storage devices; periodically attempting to connect to the issuer and if the process successfully connects to the issuer receiving an instruction to submit the transaction data for processing; decrypting the newly encrypted transaction data at the hardware security module using the new decryption key; submitting the newly decrypted transaction data for processing by the issuer; receiving, from the issuer, an indication that the newly decrypted transaction data has been processed; and in response to receiving the indication, deleting the new decryption key from the hardware security module.

Implementations can include one or more of the following. Purging the encrypted transaction data from the data processing apparatus. Prior to the encrypting, generating the cryptographic key pair. The transaction data includes data stored on a magnetic stripe of a card. The transaction data includes data from a plurality of transactions. The cryptographic key pair expires within a period of time. The instruction is received periodically until the data processing apparatus receives the indication from the issuer. Each storage device is in a distinct geographic location. The decryption key is stored in a hardware security module.

Advantages may include one or more of the following. When there is a network connection problem, a payment processor can securely store transaction data for future processing. The transaction data is stored in distinct external servers, which can provide redundancy. In addition, the payment processor can satisfy regulatory requirements to destroy approved transaction data by rendering the transaction data unrecoverable. Moreover, the credit card processor can approve a transaction despite not having received approval from the card issuer. In this case, from a customer and a merchant's perspectives, the payment processor approved the transaction and both the customer and the merchant are unaffected by the network issues. Therefore, both experience a more satisfactory buying and selling experience.

### BRIEF DESCRIPTION OF THE DRAWINGS

FIG. 1 is a schematic illustration of an example payment system architecture.
FIG. 2 is a schematic illustration of an example system for storing and forwarding encrypted payment transactions.
FIG. 3 is a flow chart of an example process of storing and forwarding a transaction.
FIG. 4 is a flow chart of an example process of securely managing an encrypted transaction.

Like reference numbers and designations in the various drawings indicate like elements.

### DETAILED DESCRIPTION

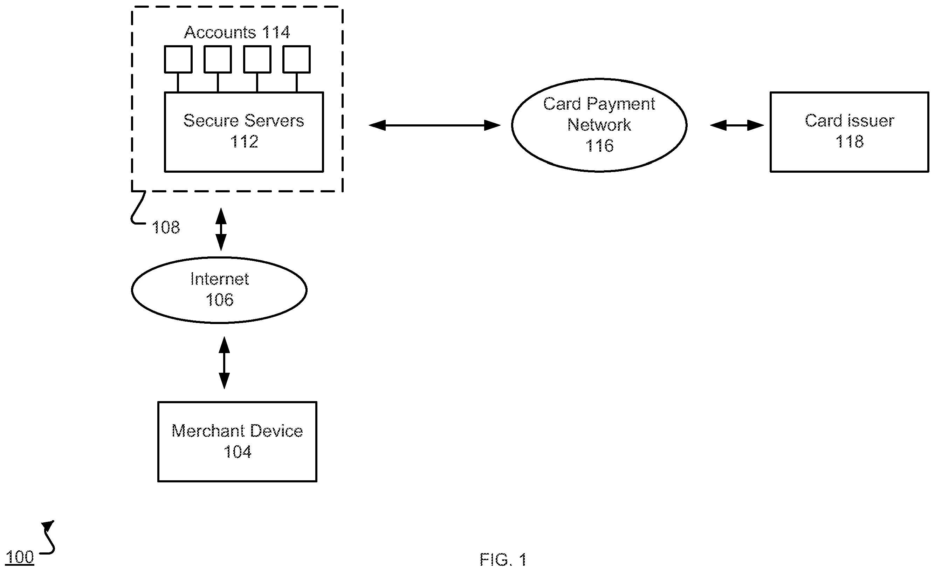

FIG. 1 is a schematic illustration of the architecture of an example payment system 100. The overall system 100 includes a merchant device 104 connected to a network, e.g., the Internet 106. The merchant device 104 is a mobile computing device, i.e., a hand-held computing device, capable of running a merchant application. For example, the merchant device 104 can be a smartphone, tablet, a desktop computer, a laptop computer, a dedicated point of sale system, or other data processing apparatus.

A payment processor operates a payment service system 108. The merchant device communicates with the payment service system 108 using the network 106. The payment service system 108 includes one or more servers 112, at least some of which can handle secure transactions (e.g., a secure server), to processes all transactions with the merchant device 104. In general, servers 112 can store public merchant information such as the merchant's address or phone number. The servers 112 also handle secure information such as credit card numbers, debit card numbers, bank accounts 114, user accounts, user identifying information or other sensitive information.

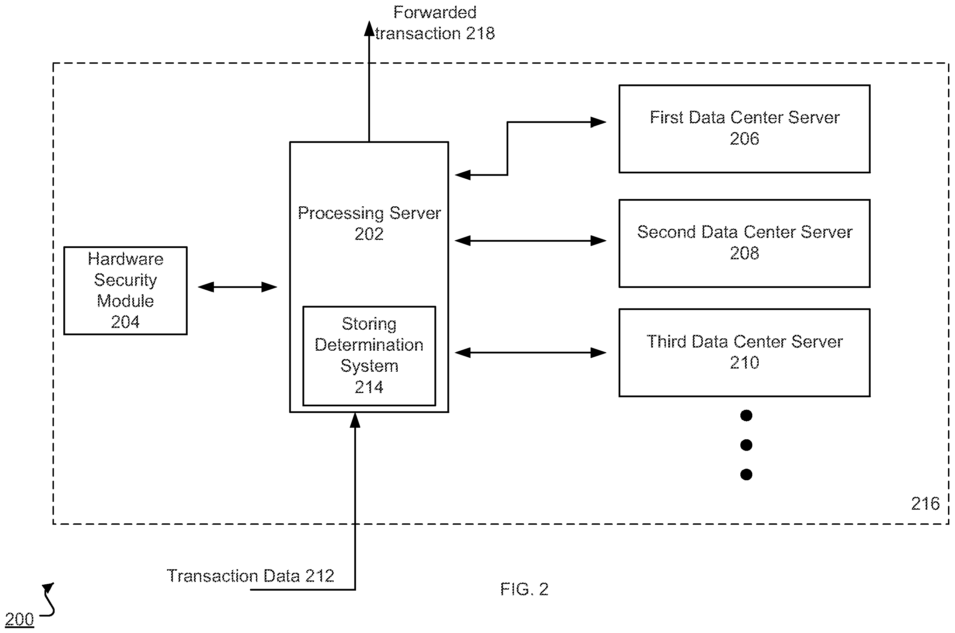

The payment service system 108 can determine whether to store and forward a transaction sent by the merchant device 104 and how to process stored transactions. Storing and forwarding a transaction is described further below in reference to FIG. 2.

The payment service system 108 can communicate electronically with a card payment network 116, e.g., Visa, Mastercard, or the like. The payment service system 108 can communicate with a computer system 116 of a card payment network, e.g., Visa or MasterCard. The payment service system 108 can communicate with a computer system 116 over the same network 106 used to communicate with the merchant device 104, or over a different network. The computer system 116 of the card payment network can communicate in turn with a computer system 118 of a card issuer, e.g., a bank. There can also be computer systems of other entities, e.g., the card acquirer, between the payment service system 108 and the card issuer.

Eventually, in order to receive funds from the transaction, the merchant will need to enter financial account information into the payment service system sufficient to receive funds. For example, in the case of a bank account, the merchant can enter the bank account number and routing number. The merchant's financial account can also be associated with a credit card account or another third party financial account. In addition, in some implementations, if the merchant has not entered the financial account information, the payment processor can hold the received funds until the financial account information is provided.

FIG. 2 is a schematic illustration 200 of an example system 216 that stores and forwards encrypted payment transactions. The system 216 can be included in a payment service system, e.g., the payment service system 108 in reference to FIG. 1. The processing server 202 receives transaction data 212, e.g., directly from a merchant device or from a transaction database. The transaction data 212 can be encrypted using a session key shared between the system 216 and the merchant device.

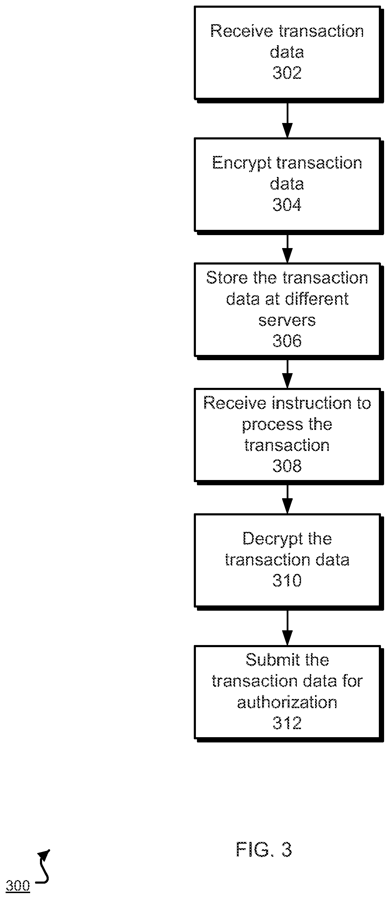

The processing server 202 includes a storing determination system 214. The storing determination system 214 can execute when a network connection problem occurs between among the system 216, a card issuer, or a card network, e.g., a broken network connection or excessive network latency. The storing determination system 214 determines whether to store the transaction data 212 for future processing based on numerous risk factors, e.g., seller type, buyer type, or transaction type. If the storing determination system 214 determines not to store the transaction data 212, the system 216 can respond to the merchant device that the transaction is rejected. If the storing determination system 214 determines to store the transaction data 212, the processing server 202 can securely store the transaction data 212 in a process described further below in reference to FIG. 3.

If the processing server 202 decides to store the transaction data, the processing server 202 can send a transaction approval to both of the customer's and merchant's mobile devices. By approving the transaction, the operator of the system 216 assumes the risk that the transaction will not be approved, e.g., by a card issuer, in the future. In particular, the system 216 can pay the merchant for the amount of the stored transaction. If the transaction is eventually approved, then the operator of the system 216 will be reimbursed by the card issuer. However, if the transaction is eventually declined, the operator of the system 216 will need to cover, i.e., pay for, the transaction.

Before storing one or more transactions, the processing server 202 generates a cryptographic key pair to be used during the storing. In some implementations, the processing server 202 requests an intermediary server, e.g., having a hardware security module, to generate the cryptographic key pair. The cryptographic key pair can be generated using the Rivest, Shamir, and Adleman (RSA) algorithm. In some implementations, the cryptographic key pair includes a public encryption key and a private decryption key. The keys can be short lived, e.g., have a lifespan of an hour, and can be used until they are discarded. In some implementations, keys are generated every few minutes. The encryption key can be stored on the processing server 202 while the decryption key can be permanently stored on a hardware security module 204. The hardware security module 204 can be a physical hardware apparatus coupled to and configured to communicate with the processing server 202. Alternatively, the hardware security module 204 can be a component of another intermediary server that communicates with the processing server 202. In some implementations, both the encryption and the decryption key are stored in the hardware security module 204. In some other implementations, the processing server 202 requests a symmetric key to be generated. The symmetric key can serve as either the encryption or decryption key, and the symmetric key can be stored in the hardware security module 204.

The processing server 202 can store the transaction data 212 in storage devices at multiple distinct data center servers, e.g., first, second, and third data center servers 206, 208, 210. The different data center servers can be located in the same data center, or the data center servers can be located in distinct geographical locations, e.g., different states or countries. By ensuring the transaction data 212 is located at multiple servers, the system 216 provides redundancy in case one data center server becomes unavailable, e.g., a server crashes or becomes unavailable due to network connection problems.

After storing the transaction data 212, the processing server 202 can forward the transaction 218 to a card network or a card issuer when the one or more network issues are resolved. This will be described further below in reference to FIG. 3.

FIG. 3 is a flow chart of an example process 300 of storing and forwarding a transaction. For convenience, the process 300 will be described with respect to a system, e.g., the system that stores and forwards transactions as described in reference to FIG. 2, having one or more computing devices that perform the process 300.

The system receives transaction data (step 302). The transaction data can be sent by a merchant's mobile device. The transaction data can represent one transaction between a customer and a merchant and includes data necessary to obtain an authorization. For example, the transaction data can include data stored on a magnetic stripe of a card, e.g., name, card number, expiration date, CVV1, or CVV2. The transaction data can also include a merchant identifier, a transaction amount, or a transaction date.

The transaction data can also be received from a transaction database. The transaction database can include one or more transactions that are determined to be stored, e.g., by a storing determining system 214. In some implementations, the transaction data includes multiple transactions to be stored, e.g., originating from one or more merchant devices.

The system encrypts the transaction data (step 304) using an encryption key from a cryptographic key pair, as described above in reference to FIG. 2. In some implementations, the transaction data is encrypted on a processing server 202. In some other implementations, the processing server 202 sends the transaction data to the hardware security module 204, which encrypts the transaction data and sends the encrypted transaction data to the processing server 202. As described above, in some implementations, the processing server 202 sends the transaction data to an intermediary server that includes the hardware security module 204 as a component. The system can delete the encryption key if there are no pending authorizations encrypted with the key, e.g., there are no pending transactions stored in an internal database, and the encryption key is not used to encrypt new transactions, e.g., a new cryptographic key pair has been generated.

The system stores copies of the encrypted transaction data at multiple servers (step 306). For example, the processing server 202 sends the encrypted transaction data to storage devices, e.g., databases, located at different multiple data centers. The processing server 202 can track the location of the transaction data in an internal database.

The system receives an instruction to process the transaction (step 308). The instruction can specify one or more transactions to forward. For example, the instruction can identify stored transactions to be batched and sent to the card issuer and card network for processing, e.g., using a first-in-first-out queue. In some implementations, the instruction is created by a background process running on the processing server 202. The process can periodically attempt to connect to a card issuer or card network until there are no more stored transactions in the system. For example, the process can ping the card issuer or the card network every few minutes or through an exponential backoff algorithm. If the process successfully connects to the card issuer or the card network within a predetermined amount of time, the storing determination system 214 can generate the instruction for processing by the processing server 202. In some other implementations, the card issuer or the card network generates and sends the instruction to the system when they are ready to process transactions again.

When the system receives the instruction, the system retrieves and decrypts the transaction data (step 310). Based on the instruction, the processing server 202 can retrieve the transaction data from an available data center. As described above, the decryption key can be permanently stored on the hardware security module 204. To decrypt, the processing server 202 can send the encrypted transaction data to the hardware security module 204. The hardware security module 204 decrypts the transaction data using the decryption key and sends the decrypted transaction data to the processing server 202. In some implementations, the encrypting and decrypting occur on separate servers.

The system then submits the decrypted transaction data for authorization (step 312). The processing server 202 can send the transaction data to the appropriate card network and card issuer, both of which can process the transaction data. The card network can respond to the processing server 202 with an indication that the transaction data has been processed, e.g., either an authorization or a rejection for each of the one or more transactions in the transaction data.

If the system receives the indication, the system can delete the decryption key, e.g., from the hardware security module 204. In some implementations, the system deletes the decryption key after confirming there are no pending transactions, e.g., by analyzing entries in an internal database. Without the decryption key, the transaction data remains encrypted and cannot be decrypted. Therefore, even though the transaction data can be located on multiple data center servers, the transaction data is no longer sensitive. In some implementations, the processing server 202 occasionally purges the encrypted transaction data from the data centers, e.g., after a predetermined amount of time.

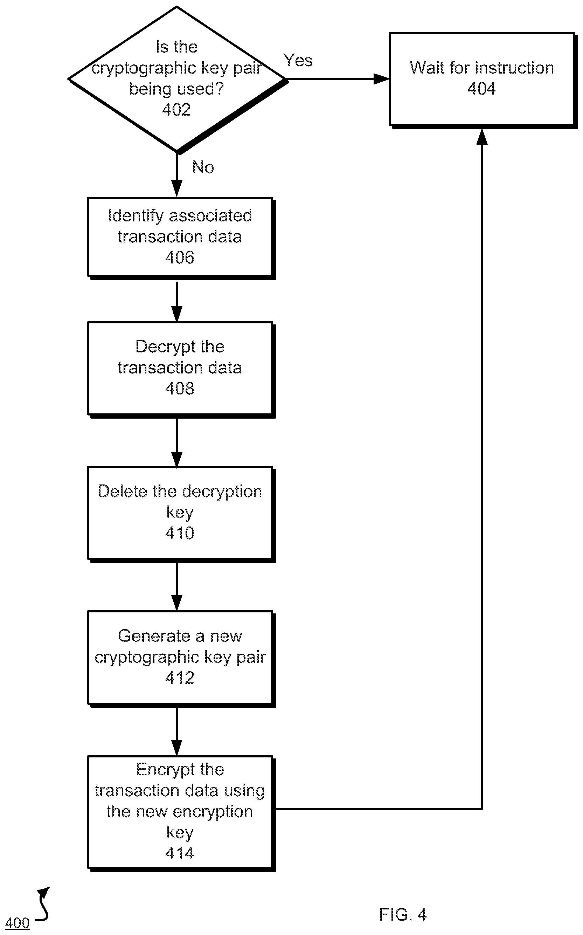

FIG. 4 is a flow chart of an example process of securely managing encrypted transaction data. For convenience, the process 400 will be described with respect to a system, e.g., the system that stores and forwards transaction data as described in reference to FIG. 2, having one or more computing devices that perform the process 400. The system can periodically check whether the key pair is being used (step 402). For example, the key pair is being used if there are pending authorizations encrypted with the encryption key of the key pair or if the encryption key is being used to encrypt new transactions. If the key pair is being used, the system can wait for an instruction to forward one or more stored transactions (step 404).

If the key pair is not being used, the system identifies transaction data that was encrypted using the encryption key of the key pair (step 406). The system retrieves the transaction data from one or more of the appropriate data center servers and decrypts the transaction data as described above in reference to FIG. 3 (step 408). The system can delete the decryption key as extra security (step 410). The system generates a new cryptographic key pair including a new encryption key and a new decryption key, e.g., at the hardware security module 204 (step 412). After generating the new cryptographic keys, the system re-encrypts the transaction data using the new encryption key (step 414) and redistributes the encrypted transaction data to the multiple data centers. In this case, the newly encrypted data replaces the data encrypted with the previous key. The system then waits for an instruction to forward the transaction data (step 404).

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on a non-transitory computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language resource), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending resources to and receiving resources from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method of processing a payment transaction at a data processing apparatus, comprising:
receiving transaction data for the payment transaction, where the transaction data includes at least card track data;
when a network connection problem occurs between the data processing apparatus and an issuer,
encrypting the transaction data at the data processing apparatus using an encryption key of a cryptographic key pair to generate encrypted transaction data, where the cryptographic key pair includes the encryption key and a decryption key and the decryption key is stored in a hardware security module connected to the data processing apparatus;
storing a plurality of copies of the encrypted transaction data in a plurality of storage devices, where each storage device is a distinct external server in a distinct geographic location;
identifying transaction data that is encrypted by the encryption key;
determining the encryption key is not being used to encrypt new transactions;
determining that there are no pending authorizations of the transaction data encrypted with the encryption key to be processed by the issuer;
decrypting the identified transaction data at the hardware security module using the decryption key;
deleting the decryption key;
generating a new cryptographic key pair, where the new cryptographic key pair includes a new encryption key and a new decryption key stored at the hardware security module; and
encrypting the decrypted transaction data using the new encryption key;
redistributing the newly encrypted transaction data to the plurality of storage devices;
periodically attempting to connect to the issuer and if the process successfully connects to the issuer receiving an instruction to submit the transaction data for processing;
decrypting the newly encrypted transaction data at the hardware security module using the new decryption key;
submitting the newly decrypted transaction data for processing by the issuer;
receiving, from the issuer, an indication that the newly decrypted transaction data has been processed; and
in response to receiving the indication, deleting the new decryption key from the hardware security module.

2. The method of claim 1, further comprising purging the encrypted transaction data from the data processing apparatus.

3. The method of any preceding claim, where prior to the encrypting, generating the cryptographic key pair.

4. The method of any preceding claim, where the transaction data includes data stored on a magnetic stripe of a card.

5. The method of any preceding claim, where the transaction data includes data from a plurality of transactions.

6. The method of any preceding claim, where the cryptographic key pair expires within a period of time.

7. The method of any preceding claim, where the instruction is received periodically until the data processing apparatus receives the indication from the issuer.

8. The method of any preceding claim, comprising requesting an intermediary server to generate the cryptographic key pair.

9. A computer-readable medium having instructions stored thereon, which, when executed by a processor, cause the processor to perform a method as any one of claims 1-8 recites.

10. A device comprising:
a processor; and
computer-readable medium coupled to the processor and having instructions stored thereon, which, when executed by the processor, cause the processor to perform a method as any one of claims 1-8 recites.

11. A system comprising:
means for processing; and
means for causing the means for processing to perform a method as any one of claims 1-8 recites.

## Patentansprüche

1. Verfahren zum Verarbeiten einer Zahlungstransaktion bei einer Datenverarbeitungseinrichtung, das Folgendes umfasst:
Empfangen von Transaktionsdaten für die Zahlungstransaktion, wobei die Transaktionsdaten wenigstens Kartenverfolgungsdaten beinhalten;
wenn ein Netzverbindungsproblem zwischen der Datenverarbeitungseinrichtung und einem Aussteller auftritt,
Verschlüsseln der Transaktionsdaten bei der Datenverarbeitungseinrichtung unter Verwendung eines Verschlüsselungsschlüssels eines kryptografischen Schlüsselpaars, um verschlüsselte Transaktionsdaten zu erzeugen, wobei das kryptografische Schlüsselpaar den Verschlüsselungsschlüssel und einen Entschlüsselungsschlüssel beinhaltet und der Entschlüsselungsschlüssel in einem Hardwaresicherheitsmodul gespeichert ist, das mit der Datenverarbeitungseinrichtung verbunden ist;
Speichern mehrerer Kopien der verschlüsselten Transaktionsdaten in mehreren Speichervorrichtungen, wobei jede Speichervorrichtung ein distinkter externer Server an einem distinkten geographischen Standort ist;
Identifizieren von Transaktionsdaten, die durch den Verschlüsselungsschlüssel verschlüsselt sind;
Bestimmen, dass der Verschlüsselungsschlüssel nicht zum Verschlüsseln neuer Transaktionen verwendet wird;
Bestimmen, dass es keine ausstehenden Autorisierungen der mit dem Verschlüsselungsschlüssel verschlüsselten Transaktionsdaten gibt, die durch den Aussteller zu bearbeiten sind;
Entschlüsseln der identifizierten Transaktionsdaten in dem Hardwaresicherheitsmodul unter Verwendung des Verschlüsselungsschlüssels;
Löschen des Verschlüsselungsschlüssels;
Erzeugen eines neuen kryptografischen Schlüsselpaars, wobei das neue kryptografische Schlüsselpaar einen neuen Verschlüsselungsschlüssel und einen neuen Entschlüsselungsschlüssel beinhaltet, der in dem Hardwaresicherheitsmodul gespeichert wird; und
Verschlüsseln der entschlüsselten Transaktionsdaten unter Verwendung des neuen Verschlüsselungsschlüssels;
Umverteilen der neu verschlüsselten Transaktionsdaten auf die mehreren Speichervorrichtungen;
periodisch Versuchen, eine Verbindung zu dem Aussteller herzustellen, und, falls der Prozess erfolgreich eine Verbindung zu dem Aussteller herstellt, Empfangen einer Anweisung, die Transaktionsdaten zur Verarbeitung zu übermitteln;
Entschlüsseln der neu verschlüsselten Transaktionsdaten in dem Hardwaresicherheitsmodul unter Verwendung des neuen Entschlüsselungsschlüssels;
Übermitteln der neu entschlüsselten Transaktionsdaten zur Verarbeitung durch den Aussteller;
Empfangen, von dem Aussteller, einer Angabe, dass die neu entschlüsselten Transaktionsdaten bearbeitet wurden; und
als Reaktion auf das Empfangen der Angabe Löschen des neuen Entschlüsselungsschlüssels aus dem Hardwaresicherheitsmodul.

2. Verfahren nach Anspruch 1, das ferner Beseitigen der verschlüsselten Transaktionsdaten aus der Datenverarbeitungseinrichtung umfasst.

3. Verfahren nach einem vorhergehenden Anspruch, wobei vor dem Verschlüsseln Erzeugen des kryptografischen Schlüsselpaars.

4. Verfahren nach einem vorhergehenden Anspruch, wobei die Transaktionsdaten Daten beinhalten, die in einem Magnetstreifen einer Karte gespeichert sind.

5. Verfahren nach einem vorhergehenden Anspruch, wobei die Transaktionsdaten Daten von mehreren Transaktionen beinhalten.

6. Verfahren nach einem vorhergehenden Anspruch, wobei das kryptografische Schlüsselpaar innerhalb einer Zeitperiode abläuft.

7. Verfahren nach einem vorhergehenden Anspruch, wobei die Anweisungen periodisch empfangen werden, bis die Datenverarbeitungseinrichtung die Eingabe von dem Aussteller empfängt.

8. Verfahren nach einem vorhergehenden Anspruch, das Anfordern eines vermittelnden Servers umfasst, um das kryptografische Schlüsselpaar zu erzeugen.

9. Computerlesbares Medium mit darauf gespeicherten Anweisungen, die, wenn sie durch einen Prozessor ausgeführt werden, bewirken, dass der Prozessor ein Verfahren nach einem der Ansprüche 1-8 durchführt.

10. Vorrichtung, die Folgendes umfasst:
einen Prozessor; und
ein computerlesbares Medium, das mit dem Prozessor gekoppelt ist und darauf gespeicherte Anweisungen aufweist, die, wenn sie durch den Prozessor ausgeführt werden, bewirken, dass der Prozessor ein Verfahren nach einem der Ansprüche 1-8 durchführt.

11. System, das Folgendes umfasst:
ein Mittel zum Verarbeiten; und
ein Mittel zum Bewirken, dass das Mittel zum Verarbeiten ein Verfahren nach einem der Ansprüche 1-8 durchführt.

## Revendications

1. Procédé de traitement d'une transaction de paiement au niveau d'un appareil de traitement de données, comprenant :
la réception de données de transaction pour la transaction de paiement, les données de transaction comprenant au moins des données de piste de carte ;
lorsqu'un problème de connexion de réseau se produit entre l'appareil de traitement de données et un émetteur,
le chiffrement des données de transaction au niveau de l'appareil de traitement de données à l'aide d'une clé de chiffrement d'une paire de clés cryptographiques pour générer des données de transaction chiffrées, la paire de clés cryptographiques comprenant la clé de chiffrement et une clé de déchiffrement, et la clé de déchiffrement étant stockée dans un module de sécurité matériel connecté à l'appareil de traitement de données ;
le stockage d'une pluralité de copies des données de transaction chiffrées dans une pluralité de dispositifs de stockage, chaque dispositif de stockage étant un serveur externe distinct dans un emplacement géographique distinct ;
l'identification de données de transaction qui sont chiffrées par la clé de chiffrement ;
la détermination que la clé de chiffrement n'est pas utilisée à chiffrer de nouvelles transactions ;
la détermination qu'il n'y a pas d'autorisations en attente des données de transaction chiffrées avec la clé de chiffrement à traiter par l'émetteur ;
le déchiffrement des données de transaction identifiées au niveau du module de sécurité matériel à l'aide de la clé de déchiffrement ;
la suppression de la clé de déchiffrement ;
la génération d'une nouvelle paire de clés cryptographiques, la nouvelle paire de clés cryptographiques comprenant un nouvelle clé de chiffrement et une nouvelle clé de déchiffrement stockées au niveau du module de sécurité matériel ; et
le chiffrement des données de transaction décryptées à l'aide de la nouvelle clé de chiffrement ;
la redistribution des données de transaction nouvellement chiffrées à la pluralité de dispositifs de stockage ;
la tentative périodique de se connecter à l'émetteur et, si le processus se connecte avec succès à l'émetteur, la réception d'une instruction pour soumettre les données de transaction à un traitement ;
le déchiffrement des données de transaction nouvellement chiffrées au niveau du module de sécurité matériel à l'aide de la nouvelle clé de déchiffrement ;
la soumission des données de transaction nouvellement déchiffrées à un traitement par l'émetteur ;
la réception, à partir de l'émetteur, d'une indication selon laquelle les données de transaction nouvellement déchiffrées ont été traitées ; et
en réponse à la réception de l'indication, la suppression de la nouvelle clé de déchiffrement du module de sécurité matériel.

2. Procédé selon la revendication 1, comprenant en outre la purge des données de transaction chiffrées à partir de l'appareil de traitement de données.

3. Procédé selon l'une quelconque des revendications précédentes, où, avant le chiffrement, la génération de la paire de clés cryptographiques.

4. Procédé selon l'une quelconque des revendications précédentes, les données de transaction comprenant des données stockées sur une bande magnétique d'une carte.

5. Procédé selon l'une quelconque des revendications précédentes, les données de transaction comprenant des données provenant d'une pluralité de transactions.

6. Procédé selon l'une quelconque des revendications précédentes, la paire de clés cryptographiques expirant dans une période de temps.

7. Procédé selon l'une quelconque des revendications précédentes, l'instruction étant reçue périodiquement jusqu'à ce que l'appareil de traitement de données reçoive l'indication provenant de l'émetteur.

8. Procédé selon l'une quelconque des revendications précédentes, comprenant la demande à un serveur intermédiaire de générer la paire de clés cryptographiques.

9. Support lisible par ordinateur ayant des instructions stockées sur celui-ci, qui, lorsqu'elles sont exécutées par un processeur, amènent le processeur à mettre en oeuvre un procédé selon l'une quelconque des revendications 1 à 8.

10. Dispositif comprenant :
un processeur ; et
un support lisible par ordinateur couplé au processeur et ayant des instructions stockées sur celui-ci qui, lorsqu'elles sont exécutées par le processeur, amènent le processeur à mettre en oeuvre un procédé selon l'une quelconque des revendications 1 à 8.

11. Système comprenant :
des moyens de traitement ; et
des moyens pour amener les moyens de traitement à mettre en oeuvre un procédé selon l'une quelconque des revendications 1 à 8.
